# EUROPEAN PATENT APPLICATION

(11) **EP 4 362 204 A1**
(43) Date of publication of application: **01.05.2024**
(21) Application number: 22203613.9
(22) Date of filing: 25.10.2022
(51) Int. Cl.: H01M 50/507, H01M 50/509, H01M 50/514, H01M 50/522, H01M 50/526

(54) **BATTERY**

(71) Applicant: MAHLE International GmbH, 70376 Stuttgart (DE)
(72) Inventor: FRENCH, David, Nailstone Nuneaton CV130ON (GB); PARRY, Owain, NN28SE Boughton (GB)
(74) Representative: BRP Renaud & Partner mbB Rechtsanwälte Patentanwälte Steuerberater

(57) **Abstract**

The invention relates to a battery (1) for a motor vehicle or other applications. The battery (1) contains a cell stack (2) with battery cells (3) and at least one current busbar (5a, 5b). The respective current busbar (5a, 5b) is electrically conductively connected to electrical contacts (4a, 4b) of the battery cells (3) by means of metal cold spraying.

The invention also relates to a method for manufacturing the battery (1).

## Description

The invention relates to a battery for a motor vehicle or other applications according to the generic term of claim 1. The invention also relates to a method for manufacturing the battery.

A battery usually contains several battery cells that are stacked together to form a cell stack. The battery cells are electrically conductively connected to each other and to the outside via busbars. To achieve a secure electrically conductive contact between electrical contacts of the battery cells and the busbars, the electrical contacts and the busbars are usually joined together by laser or spot or friction or other welding. However, welding heats the battery cells at their electrical contacts and this can lead to heating of the battery cells and thermal decomposition of the materials used in the battery cells. This damages the battery cells.

It is therefore the object of the invention to provide an improved or at least alternative embodiment for a battery of the type described, in which the disadvantages described are overcome. Especially, it is the object of the invention to provide a secure connection between battery cells and busbars for battery of the type described.

This object is solved according to the invention by the object of the independent claims. Advantageous embodiments are the subject of the dependent claims.

The present invention is based on the general idea of using a metal spray to connect electrical contacts of battery cells to busbars, which connects the contacts to busbars without excessive heat input and avoids damage to the battery cells.

The battery according to the invention is provided or designed for a motor vehicle or other applications. The battery contains a cell stack with a plurality of battery cells and at least one electrically conductive current busbar. The respective current busbar is electrically conductively connected i.e. electrically contacted to electrical contacts of the battery cells. According to the invention, the respective current busbar is electrically conductively connected to the respective contacts of the battery cells by means of metal cold spraying.

In metal cold spraying, a metal powder is applied to a substrate at a high velocity. In the process, a compressed gas is heated and then expanded to ambient pressure in a convergent-divergent nozzle. This accelerates the gas to a very high velocity. The metal powder is mixed with the accelerated gas and thus applied to the substrate. Due to the high velocity, the metal powder adheres to the substrate upon impact. The heat input into the substrate is comparatively low. If the respective current busbar is electrically conductively connected to the electrical contacts of the battery cells by means of the metal cold spraying, the heat contribution into the battery cells remains low. Accordingly, this reduces the risk of damage to the battery cells and increases the service life of the battery cells.

The battery cells of the cell stack can be cylindrical or prismatic, for example. In the cell stack, the battery cells can be aligned in a longitudinal direction of the cell stack and arranged transversely to the longitudinal direction side by side in at least one cell row. The respective current busbar can be aligned transversely to the longitudinal direction of the cell stack and can be arranged at a longitudinal end of the cell stack corresponding to the longitudinal direction.

The battery can contain at least two current busbars for contacting the identical-poled contacts of the battery cells. The respective current busbars can then be electrically conductively connected to the identical-poled electrical contacts of the battery cells and to each other. In other words, the positive/negative terminals of the battery cells can be electrically contacted by means of several current busbars.

The battery can contain at least two current busbars for contacting the opposite-poled contacts of the battery cells. The respective current busbars can then each be electrically conductively connected to the opposite-poled electrical contacts of the battery cells and electrically insulated from one another in accordance with their electrical contacting. In other words, the positive terminals of the battery cells can be electrically contacted by means of at least one current busbar and the negative terminals of the battery cells can be electrically contacted by means of at least one current busbar. The current busbar contacting the positive terminals and the current busbar contacting the negative terminals are suitably electrically insulated from one another.

The respective current busbar can be electrically conductively connected to the respective contacts of the battery cells in each case via a metallic additional layer produced in metal cold spraying. The respective current busbar can be connected to the respective contacts of the battery cells by means of the additional layer in a point-by-point and/or mechanical manner. The respective additional layer can be applied to the respective current busbar and/or to the respective contacts of the battery cells. The electrically conductive and/or mechanical and/or point-by-point connection of the respective current busbar and the respective contact of the battery cell can in particular be formed in a crossing region which is formed between the respective current busbar and the respective contact transversely to the longitudinal direction of the cell stack. The respective busbar and/or the respective contact can be formed in such a way that the crossing region is enlarged.

The respective additional layer can be formed from a material identical to the respective contacts of the battery cells and/or to the respective current busbar. Alternatively, the respective additional layer can be formed from a material that differs from the respective contacts and/or from the respective current busbar. The respective additional layer is formed from metal. In particular, the respective additional layer can be formed from copper.

The battery can contain at least one electrically conductive contact plate, wherein the respective contact plate bears on i.e. is supported by the battery cells and the respective current busbar bears on i.e. is supported by the respective contact plate. The respective current busbar can then be electrically conductively connected with the respective contact plate and guided through the respective contact plate to the respective contacts of the battery cells. The respective contact plate can contain corresponding slots or openings for this purpose. The respective current busbar can be electrically conductively connected to the outside via the respective contact plate. If the battery contains a plurality of current busbars for the respective identical-poled contacts of the battery cells, the current busbars can all be electrically conductively connected to the outside and to one another by means of the common contact plate. The respective contact plate is electrically insulated from the battery cells and from the opposite-poled contacts of the battery cells.

The invention also relates to a method for producing the battery described above, wherein the respective current busbars are electrically conductively connected i.e. electrically contacted to the respective contacts of the battery cells by means of metal cold spraying. During metal cold spraying, metallic particles can be applied to the respective current busbar and/or to the respective contacts of the battery cells in the form of an additional layer. The respective busbar and the respective contacts of the battery cells can thus be electrically conductively and mechanically connected to each other via the additional layer. The respective current busbar can be connected to the respective contacts of the battery cells by means of metal cold spraying without generating heat. The respective current busbar can be connected to the respective contacts of the battery cells by means of metal cold spraying at a temperature below 60°. To avoid repetition, reference is made at this point to the above explanations.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, in each case schematically
- Fig. 1: an exploded view of a battery according to the invention with cylindrical battery cells;
- Fig. 2: a sectional view of the battery according to the invention with cylindrical battery cells.

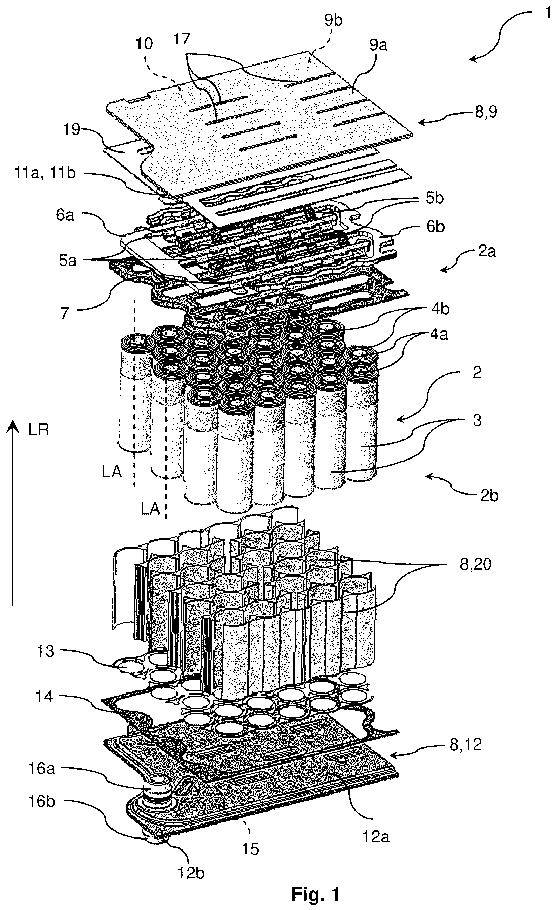

Fig. 1 shows an exploded view of a battery 1 according to the invention for a motor vehicle. Here and further, only some elements of the same type in the battery 1 are provided with reference signs for clarity. The elements not directly visible are marked with broken lines. The battery 1 contains a cell stack 2 with a plurality of cylindrical battery cells 3 which are aligned with their longitudinal center axes LA parallel to a longitudinal direction LR of the cell stack 2 and side by side forming several cell rows. The cell stack 2 contains two longitudinal ends 2a and 2b corresponding to its longitudinal direction LR. The battery cells 3 contain electrical contacts 4a and 4b - positive terminals and negative terminals - arranged at one end of the battery cells 3 and at the longitudinal end 2a of the cell stack 2.

For contacting the contacts 4a and 4b, the battery 1 contains a plurality of current busbars 5a and 5b. The current busbars 5a and 5b are arranged at the longitudinal end 2a of the cell stack 2 and are associated with the corresponding contacts 4a and 4b. Electrically conductive contact plates 6a and 6b are disposed between the battery cells 3 and the current busbars 5a and 5b. The contact plates 6a and 6b bear on i.e. are supported by the battery cells 3 and the current busbars 5a and 5b bear on i.e. are supported by the contact plates 6a and 6b. The current busbars 5a and 5b are electrically conductively connected to the contact plates 6a and 6b and electrically contacted to the outside via the contact plates 6a and 6b. The current busbars 5a and 5b are guided through openings in the contact plates 6a and 6b to the contacts 4a and 4b. A dielectric insulating layer 7 is arranged between the contact plates 6a and 6b and the battery cells 3.

The battery 1 also contains a cooling device 8 with a cooling plate 9. The cooling plate 9 is arranged at the longitudinal end 2a of the cell stack 2 and at the current busbars 5a and 5b facing away from the cell stack 2. A heat conducting layer 19 is arranged between the cooling plate 9 and the current busbars 5a and 5b. The current busbars 5a and 5b are thus connected to the cooling plate 9 in a heat-transferring manner. The cooling plate 9 contains a plate-shaped i.e. flat cover plate 9a and a structured structural plate 9b, between which channels 10 through which a cooling fluid can flow are formed. The channels 10 are fluidically connected to the outside via connectors 11a and 11b. The cooling fluid is preferably a liquid. The cover plate 9a and the structural plate 9b are joined together in a fluid-tight manner in certain areas. In addition, a plurality of slit-shaped degassing openings 17 are formed in the cooling plate 9, which are arranged parallel to and between the current busbars 5a and 5b. The degassing openings 17 thereby penetrate the cooling plate 9 in areas where the cover plate 9a and the structural plate 9b are joined together.

The cooling device 8 also contains a cooling plate 12. The cooling plate 12 is arranged at the longitudinal end 2b of the cell stack 2 and is connected to the battery cells 3 in a heat-transferring manner via a heat-conducting adhesive layer 13. The battery cells 3 are thereby connected to the cooling plate 12 in a heat-conducting manner and can be cooled. A dielectric insulating layer 14 is also arranged between the cell stack 2 and the cooling plate 12. The insulating layer 14 defines the distance between the battery cells 3 and the cooling plate 12, and thereby the thickness of the adhesive layer 13. The cooling plate 12 contains a first plate 12a and a second plate 12b, between which a cooling space 15 through which a cooling fluid can flow is formed. The cooling fluid is preferably a liquid. The cooling space 15 through which the cooling fluid can flow is fluidically connected to the outside via connectors 16a and 16b. The cooling space 15 of the cooling plate 12 can be fluidically connected to the channels 10 of the cooling plate 9 and can be flowed through by the same cooling fluid.

The cooling device 8 also contains a plurality of cooling fins 20 aligned parallel to the longitudinal direction LR and arranged between the battery cells 3 of the cell stack 2. The cooling fins 20 are formed from a heat-conducting material and are connected to the battery cells 3 and the cooling plate 12 in a heat-conducting manner. This allows the heat generated in the battery cells 3 to be transported from the battery cells 3 to the cooling plate 12, thereby cooling the battery cells 3. The respective cooling fin 20 can extend in the longitudinal direction LR of the cell stack 2 over 80% to 100% of the height of the respective battery cells 3.

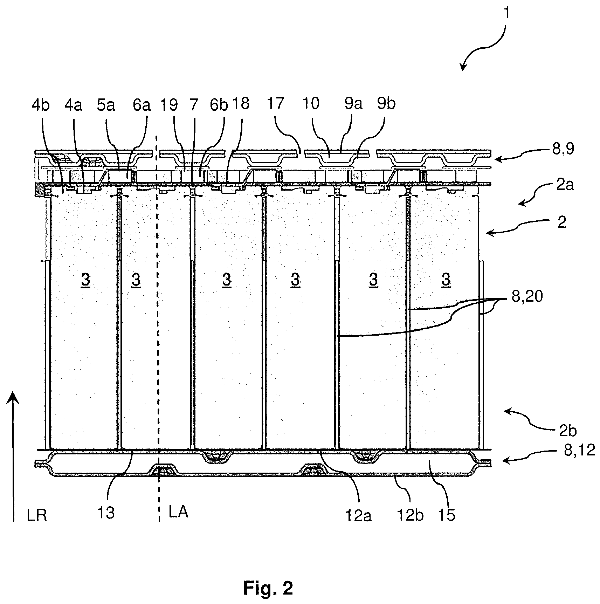

Fig. 2 shows a sectional view of the battery 1 according to the invention. As can be seen particularly well here, the current busbars 5a and 5b are electrically conductively connected to the corresponding contacts 4a and 4b of the battery cells 3. Here, the electrically conductive connection between the current busbars 5a and 5b and the contacts 4a and 4b is realized by a metal cold spraying. For this purpose, a metallic additional layer 18 is applied to the contacts 4a and 4b and the current busbars 5a and 5b in metal cold spraying. The metallic additional layer 18 mechanically and electrically connects the contacts 4a and 4b and the busbars 5a and 5b.

## Claims

1. Battery (1),
- wherein the battery (1) contains a cell stack (2) with a plurality of battery cells (3) and at least one electrically conductive current busbar (5a, 5b),
- wherein the respective current busbar (5a, 5b) is electrically conductively connected to electrical contacts (4a, 4b) of the battery cells (3),
**characterized**
**in that** the respective current busbar (5a, 5b) is electrically conductively connected to the respective contacts (4a, 4b) of the battery cells (3) by means of metal cold spraying.

2. Battery according to claim 1,
**characterized**
**in that** the respective current busbar (5a, 5b) is electrically conductively connected to the respective contacts (4a, 4b) of the battery cells (3) in each case via a metallic additional layer (18) produced in metal cold spraying.

3. Battery according to claim 2,
**characterized**
**in that** the respective current busbar (5a, 5b) is electrically conductively connected to the respective contacts (4a, 4b) of the battery cells (3) in each case by means of the additional layer (18) in a point-by-point manner.

4. Battery according to claim 2 or 3,
**characterized**
**in that** the respective current busbar (5a, 5b) is mechanically connected to the respective contacts (4a, 4b) of the battery cells (3) in each case by means of the additional layer (18).

5. Battery according to any one of claims 2 to 4,
**characterized**
**in that** the respective additional layer (18) is formed from a material which is identical to the respective contacts (4a, 4b) of the battery cells (3) and/or to the respective current busbar (5a, 5b) or from a material which differs from the respective contacts (4a, 4b) and/or from the respective current busbar (5a, 5b).

6. Battery according to any one of the preceding claims,
**characterized**
- **in that** the battery (1) contains at least one electrically conductive contact plate (6a, 6b), wherein the respective contact plate (6a, 6b) bears on the battery cells (3) and the respective current busbar (5a, 5b) bears on the respective contact plate (6a, 6b) and is electrically conductively connected with the respective current busbar (5a, 5b), and
- **in that** the respective current busbar (5a, 5b) is guided through the respective contact plate (6a, 6b) to the respective contacts (4a, 4b) of the battery cells (3).

7. Battery according to any one of the preceding claims,
**characterized**
- **in that** the battery (1) contains at least two current busbars (5a, 5b), wherein the respective current busbars (5a, 5b) are electrically conductively connected to the identical-poled electrical contacts (4a, 4b) of the battery cells (3) and to one another, and/or
- **in that** the battery (1) contains at least two current busbars (5a, 5b), wherein the respective current busbars (5a, 5b) each are electrically conductively connected to the different-poled electrical contacts (4a, 4b) of the battery cells (3) and are electrically insulated from one another in accordance with their electrical contacting.

8. Battery according to any one of the preceding claims,
**characterized**
- **in that** the battery cells (3) are aligned in the cell stack (2) in a longitudinal direction (LR) of the cell stack (2) and arranged transversely to the longitudinal direction (LR) side by side in at least one cell row,
- **in that** the respective current busbar (5a, 5b) is aligned transversely to the longitudinal direction (LR) of the cell stack (2) and is arranged at a longitudinal end (2a) of the cell stack (2) corresponding to the longitudinal direction (LR), and
- **in that** the respective current busbar (5a, 5b) is electrically conductively connected to the identical-poled electrical contacts (4a, 4b) of the battery cells (3).

9. Method of manufacturing the battery (1) according to any one of the preceding claims, wherein the respective current busbar (5a, 5b) is electrically conductively connected to the respective contacts (4a, 4b) of the battery cells (3) by means of metal cold spraying.

10. Method according to claim 9,
**characterized**
- **in that**, during metal cold spraying, metallic particles are applied to the respective current busbar (5a, 5b) and/or to the respective contacts (4a, 4b) of the battery cells (3) and form a metallic additional layer (18), and
- **in that** the respective current busbar (5a, 5b) and the respective contacts (4a, 4b) of the battery cells (3) are thereby electrically conductively and mechanically connected to one another point by point via the additional layer (18).

11. Method according to claim 9 or 10,
**characterized**
- **in that** the respective current busbar (5a, 5b) is connected to the respective contacts (4a, 4b) of the battery cells (3) by means of metal cold spraying without generating heat, and/or
- **in that** the respective current busbar (5a, 5b) is connected to the respective contacts (4a, 4b) of the battery cells (3) by means of metal cold spraying at a temperature below 60°.
